# EUROPEAN PATENT APPLICATION

(11) **EP 4 641 039 A1**
(43) Date of publication of application: **29.10.2025**
(21) Application number: 23903212.1
(22) Date of filing: 20.11.2023
(51) Int. Cl.: F16D 3/223, F16D 3/224, F16D 3/2245

(54) **FIXED-TYPE CONSTANT VELOCITY UNIVERSAL JOINT**

(30) Priority: 12.12.2022 JP 2022198020
(71) Applicant: NTN Corporation, Osaka-shi Osaka 530-0005 (JP)
(72) Inventor: FUNAHASHI Masashi, Iwata-shi Shizuoka 438-8510 (JP); FUJIO Teruaki, Iwata-shi Shizuoka 438-8510 (JP)
(74) Representative: Grünecker Patent- und Rechtsanwälte PartG mbB
(86) International application number: PCT/JP2023/041568
(87) International publication number: WO 2024/127915

(57) **Abstract**

A track groove 7 of an outer joint member 2 includes a guide surface 71 for guiding a ball 4. A chamfered portion 30 having an arcuate cross-sectional shape in a direction orthogonal to an axial direction is formed between a spherical inner peripheral surface 6 and the guide surface 71 of the outer joint member 2. The chamfered portion 30 and the guide surface 71 of the outer joint member 2 are connected at an edge-shaped connection point E1, and an angle ε between a tangent of the guide surface 71 and a tangent of the chamfered portion 30 at the connection point E1 is set to 0° < ε ≤ 15°.

## Description

### TECHNICAL FIELD

The present invention relates to a fixed-type constant velocity universal joint used for power transmission of automobiles and various industrial machines.

### BACKGROUND ART

In a drive shaft used in a power transmission system of an automobile, a plunging-type constant velocity universal joint is coupled to an inboard side (center side in a vehicle width direction) of an intermediate shaft, and a fixed-type constant velocity universal joint is coupled to an outboard side (end side in the vehicle width direction) in many cases. The plunging-type constant velocity universal joint herein allows both angular displacement and axial relative movement between two shafts, and the fixed-type constant velocity universal joint allows angular displacement between two shafts but does not allow axial relative movement between two shafts.

As the fixed-type constant velocity universal joint, a constant velocity universal joint of a non-crossing track groove type in which track grooves provided on a spherical inner peripheral surface of an outer joint member and a spherical outer peripheral surface of an inner joint member are not inclined in a circumferential direction and a plane including a ball track center line of each track groove and a joint center is in the same direction as an axis of the joint (see Patent Literature 1) and a constant velocity universal joint of a crossing track groove type in which a plane including a ball track center line of each track groove and a joint center is inclined in a circumferential direction with respect to an axis of the joint (see Patent Literature 2) are known. Although the latter is higher in cost than the former, since axial forces in opposite directions from the balls act on pocket portions adjacent to each other in the circumferential direction of a cage, there is an advantage that a contact force between a spherical outer peripheral surface of the cage and a spherical inner peripheral surface of an outer joint member and a contact force between a spherical inner peripheral surface of the cage and a spherical outer peripheral surface of an inner joint member 3 can be suppressed to achieve high efficiency.

In a conventional fixed-type constant velocity universal joint, a maximum operating angle of 50° or less (about 47° in a case of a Rzeppa-type constant velocity universal joint, and about 50° in a case of an undercut-free-type constant velocity universal joint) is common. However, in a recent fixed-type constant velocity universal joint for a drive shaft, a large maximum operating angle exceeding 50° is increasingly required regardless of a non-crossing track groove type and a crossing track groove type in order to improve turning performance and small turning performance of a vehicle.

When the large maximum operating angle is taken in the fixed-type constant velocity universal joint, a contact ellipse due to contact with a ball easily protrudes to a shoulder portion of a track groove. Therefore, when high torque is loaded, an excessive edge load may occur at the shoulder portion of the track groove, and the shoulder portion of the track groove may be deformed. Deformation of the shoulder portion of the track groove causes abnormal noise and vibration. As a countermeasure against this problem, as disclosed in Patent Literature 1, it is effective to provide an R-shaped track chamfer along a boundary between an inner diameter spherical surface of the outer joint member and the track groove, and continuously form the track chamfer so as to be smoothly connected to the track groove and the spherical inner peripheral surface.

### CITATIONS LIST

### PATENT LITERATURES

Patent Literature 1: JP 2010-164106 A
Patent Literature 2: JP 5885997 B2

### SUMMARY OF INVENTION

### TECHNICAL PROBLEMS

On the other hand, when mass producing the outer joint member, it is difficult to smoothly connect the track chamfer to the track groove and the spherical inner peripheral surface of the outer joint member or the spherical outer peripheral surface of the inner joint member from the viewpoint of machining errors and the like. If this is purposely realized, there is a problem that manufacturing cost increases due to, for example, requirement of finishing processing to the track chamfer.

Therefore, an object of the present invention is to provide a fixed-type constant velocity universal joint capable of suppressing deformation of a shoulder portion of a track groove of an outer joint member at low cost when a high torque load is applied.

### SOLUTIONS TO PROBLEMS

The present invention is made based on the above findings is a fixed-type constant velocity universal joint including: an outer joint member having a plurality of track grooves formed on a spherical inner peripheral surface and having an opening side and a back side separated in an axial direction; an inner joint member having a plurality of track grooves formed on a spherical outer peripheral surface; a ball disposed between the track groove of the outer j oint member and the track groove of the inner joint member corresponding thereto; and a cage having a pocket for accommodating the ball and fitted to the spherical inner peripheral surface of the outer joint member and the spherical outer peripheral surface of the inner joint member, the track groove of the outer joint member having a guide surface for guiding the ball, and a chamfered portion having an arcuate cross-sectional shape in a direction orthogonal to the axial direction being formed between the spherical inner peripheral surface and the guide surface of the outer joint member, in which the chamfered portion and the guide surface of the outer joint member are connected at an edge-shaped connection point, and an angle ε between a tangent of the guide surface and a tangent of the chamfered portion at the connection point is set to 0° < ε ≤ 15°.

With such a fixed-type constant velocity universal joint, measures, processing, and the like for smoothly connecting the guide surface of the track groove and the chamfered portion are unnecessary. Therefore, manufacturing cost of the outer joint member can be reduced. In addition, by setting the angle ε between the tangent of the guide surface and the tangent of the chamfered portion at the connection point within the range of 0° < ε ≤ 15°, even when high torque is transmitted, an excessive edge load due to contact with the ball does not occur on a shoulder portion of the track groove. Therefore, deformation and the like at the shoulder portion of the track groove of the outer joint member can be suppressed, and generation of abnormal noise and vibration can be avoided.

A curvature radius R of the chamfered portion is preferably in a range of 3.0 mm ≤ R ≤ 9.0 mm. When the curvature radius R of the chamfered portion is less than 3 mm, an amount of chamfer decreases, so that an effect of alleviating an edge load becomes insufficient and an effect of suppressing deformation of the shoulder portion is deteriorated. When the curvature radius R exceeds 9 mm, an edge of the connection point becomes sharp, and it becomes difficult to maintain the angle ε at 15° or less.

The track groove of the outer joint member preferably has a portion in which a ball track center line is an arc.

The curvature radius of the chamfered portion can be made non-uniform in the axial direction.

The chamfered portion can be provided on a back side of a curvature center of the ball track center line.

The curvature center of the ball track center line and a curvature center of the spherical inner peripheral surface can be offset in the axial direction.

The curvature radius of the chamfered portion can be made uniform in the axial direction.

The chamfered portion can be provided over an entire axial length of the track groove of the outer joint member.

An axial offset amount between the curvature center of the ball track center line and the curvature center of the spherical inner peripheral surface can be set to 0.

As the fixed-type constant velocity universal joint, it is possible to use a fixed-type constant velocity universal joint in which a plane including the ball track center line of the track groove of the outer joint member and a joint center is inclined with respect to an axis of the joint, and inclination directions of the track grooves adjacent to each other in a circumferential direction are opposite to each other, and a ball track center line of the track groove of the inner joint member is formed in mirror-image symmetry with the ball track center line of the paired track groove of the outer joint member with reference to a plane including the joint center and being orthogonal to the axis of the joint in a state of an operating angle of 0° .

### ADVANTAGEOUS EFFECTS OF INVENTION

According to the present invention, deformation of the shoulder portion of the track groove of the outer joint member at the time of a high torque load can be suppressed at low cost.

### BRIEF DESCRIPTION OF DRAWINGS

FIG. 1 is a longitudinal sectional view of a fixed-type constant velocity universal joint according to a first embodiment of the present invention.
FIG. 2 is a right side view of the fixed-type constant velocity universal joint.
FIG. 3 is an enlarged cross-sectional view of one ball and track grooves on a line P-P in FIG. 1.
FIG. 4 is an enlarged cross-sectional view illustrating a spherical inner peripheral surface and a track groove of an outer joint member illustrated in FIG. 3.
FIG. 5 is an enlarged cross-sectional view illustrating a region C in FIG. 4.
FIG. 6 is a longitudinal sectional view of the outer joint member.
FIG. 7A is a cross-sectional view taken along a line A-A in FIG. 6.
FIG. 7B is a cross-sectional view taken along a line B-B in FIG. 6.
FIG. 8 is a longitudinal sectional view of the fixed-type constant velocity universal joint taking a maximum operating angle.
FIG. 9A is a partial longitudinal sectional view of a fixed-type constant velocity universal joint according to a first embodiment.
FIG. 9B is a right side view of the fixed-type constant velocity universal joint according to the first embodiment.
FIG. 10A is a partial longitudinal sectional view of an outer joint member of the fixed-type constant velocity universal joint.
FIG. 10B is a right side view of the outer joint member of the fixed-type constant velocity universal joint.
FIG. 11A is a left side view of an inner joint member of the fixed-type constant velocity universal joint.
FIG. 11B is a plan view illustrating an outer peripheral surface of the inner joint member of the fixed-type constant velocity universal joint.
FIG. 11C is a right side view of the inner joint member of the fixed-type constant velocity universal joint.
FIG. 12 is a partial longitudinal sectional view illustrating details of a track groove of the outer joint member.
FIG. 13 is a longitudinal sectional view illustrating details of a track groove of the inner joint member.
FIG. 14 is a longitudinal sectional view of the outer joint member.
FIG. 15A is a cross-sectional view taken along a line A'-A' in FIG. 14.
FIG. 15B is a cross-sectional view taken along a line B'-B' in FIG. 14.

### DESCRIPTION OF EMBODIMENTS

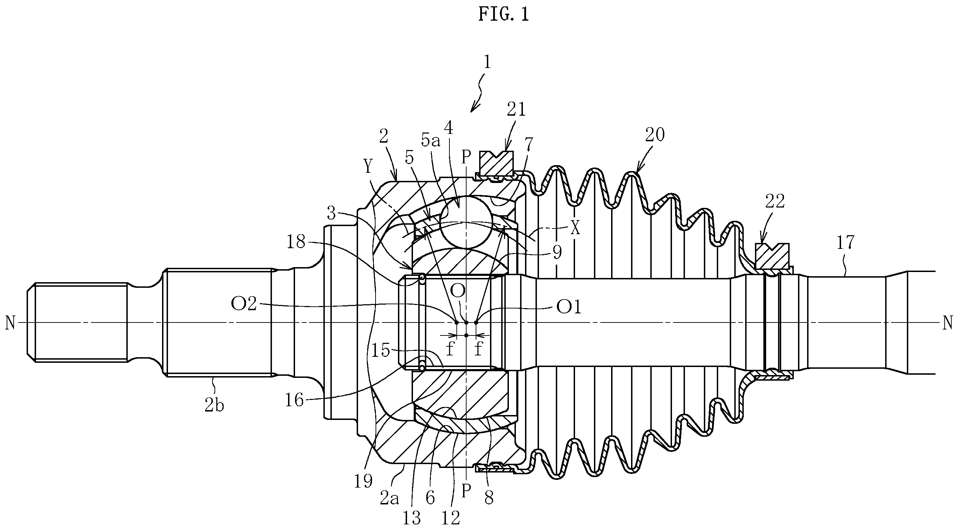

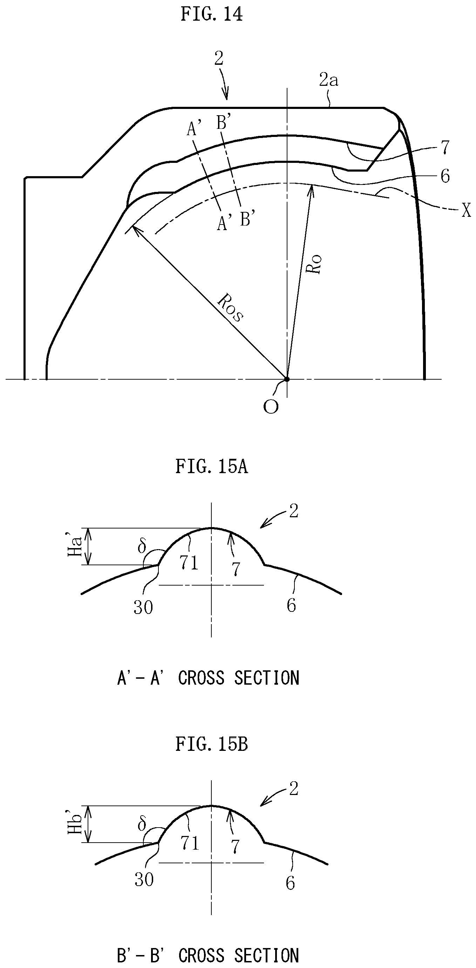

Hereinafter, embodiments of the present invention will be described with reference to the FIGS. 1 to 15A and 15B.

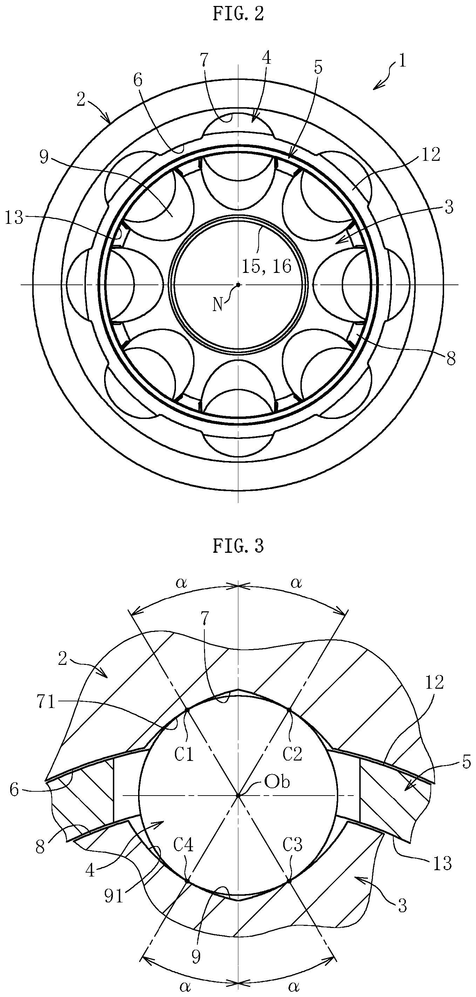

FIG. 1 is a longitudinal sectional view of a fixed-type constant velocity universal joint 1 according to a first embodiment, and FIG. 2 is a right side view thereof (illustration of a boot 20 and a boot band 21 is omitted). The constant velocity universal joint 1 is a Rzeppa-type constant velocity universal joint, and includes an outer joint member 2, an inner joint member 3, a torque transmitting ball 4 (hereinafter simply referred to as a ball), and a cage 5 as main components. As the fixed-type constant velocity universal joint 1, an undercut-free-type constant velocity universal joint can also be used.

As illustrated in FIGS. 1 and 2, the outer joint member 2 includes a cup-shaped mouth portion 2a having one end in an axial direction opened and another end in the axial direction closed, and a shaft portion 2b protruding from the other end in the axial direction of the mouth portion 2a. In the following description, one end side in the axial direction of the mouth portion 2a is referred to as an opening side, and another end side in the axial direction thereof is referred to as a back side. An inner peripheral surface 6 of the mouth portion 2a is formed in a spherical shape. The inner joint member 3 is accommodated in the mouth portion 2a of the outer joint member 2, and an outer peripheral surface 8 thereof has a spherical shape.

On the spherical inner peripheral surface 6 of the outer joint member 2, a plurality of (for example, eight) track grooves 7 is formed at equal intervals in a circumferential direction and along the axial direction. On the spherical outer peripheral surface 8 of the inner joint member 3, a plurality of (for example, eight) track grooves 9 facing the track grooves 7 of the outer joint member 2 is formed at equal intervals in the circumferential direction and along the axial direction. The plurality of (for example, eight) balls 4 for transmitting torque is incorporated one by one between the track groove 7 of the outer joint member 2 and the track groove 9 of the inner joint member 3. The cage 5 for holding the balls 4 is disposed between the spherical inner peripheral surface 6 of the outer joint member 2 and the spherical outer peripheral surface 8 of the inner joint member 3. The ball 4 is accommodated in a pocket portion 5a of the cage 5. A spherical outer peripheral surface 12 of the cage 5 is slidably fitted to the spherical inner peripheral surface 6 of the outer joint member 2, and a spherical inner peripheral surface 13 of the cage 5 is slidably fitted to the spherical outer peripheral surface 8 of the inner joint member 3.

A term ball track center line is used herein to describe a form and a shape of an axially extending track groove. The ball track center line means a track drawn by the center of the ball 4 when the ball 4 arranged in the track groove moves along the track groove.

Curvature centers of the spherical inner peripheral surface 6 of the outer joint member 2 and the spherical outer peripheral surface 8 of the inner joint member 3 are on a joint center O. A curvature center of the spherical outer peripheral surface 12 of the cage 5 fitted with the spherical inner peripheral surface 6 of the outer joint member 2 and the spherical inner peripheral surface 13 of the cage 5 fitted with the spherical outer peripheral surface 8 of the inner joint member 3 are also on the joint center O.

The track groove 7 of the outer joint member 2 has an arc-shaped ball track center line X, and the track groove 9 of the inner joint member 3 has an arc-shaped ball track center line Y. A curvature center O1 of the ball track center line X of the outer joint member 2 and a curvature center O2 of the ball track center line Y of the track groove 9 of the inner joint member 3 are offset at an equal distance f to axially opposite sides with respect to the joint center O. As a result, when the fixed-type constant velocity universal joint 1 takes an operating angle, the ball 4 is always guided on a plane that bisects an angle (operating angle) formed by both axes of the outer joint member 2 and the inner joint member 3, and rotational torque is transmitted at a constant speed between the two axes.

As described above, since the curvature center O1 of the track groove 7 of the outer joint member 2 and the curvature center O2 of the track groove 9 of the inner joint member 3 are equidistantly offset in the axial direction with respect to the joint center O, the facing track grooves of the outer joint member 2 and the inner joint member 3 have a wedge shape expanding from the back side toward the opening side of the outer joint member 2, and each ball 4 is accommodated in the wedge-shaped track grooves and transmits torque between the outer joint member 2 and the inner joint member 3. The cage 5 is incorporated to hold every ball 4 on the plane bisecting the operating angle.

FIG. 3 is an enlarged cross-sectional view of one ball and track grooves on a line P-P in FIG. 1. As illustrated in FIG. 3, the track groove 7 of the outer joint member 2 and the track groove 9 of the inner joint member 3 have guide surfaces 71 and 91 for guiding the ball 4, respectively. Cross-sectional shapes of the guide surfaces 71 and 91 are formed in an elliptical shape or a Gothic arch shape. The ball 4 makes angular contact with the guide surface 71 of the track groove 7 of the outer joint member 2 at two points C1 and C2, and makes angular contact with the guide surface 91 of the track groove 9 of the inner joint member 3 at two points C3 and C4. Therefore, the ball 4 is in contact with the guide surfaces 71 and 91 on side surface sides of the track grooves 7 and 9 slightly away from groove bottoms of the track grooves 7 and 9. An angle (contact angle α) formed by a straight line passing through a center Ob of the ball 4 and each of the contact points C1, C2, C3, and C4 and a straight line passing through the center Ob of the ball 4 and the joint center O [see FIG. 1] is preferably set to 30° to 45°. Note that the track grooves 7 and 9 may have an arcuate cross-sectional shape, and contact between the track grooves 7 and 9 and the ball 4 may be a circular contact.

As shown in FIG. 1, a female spline 16 (the spline also includes a serration; the same applies hereinafter) is formed on an inner hole 15 of the inner joint member 3, and by fitting a male spline 19 of a shaft 17 to the spline 16, the inner joint member 3 and the shaft 17 are coupled so that torque can be transmitted. The inner joint member 3 and the shaft 17 are positioned in the axial direction by a snap ring 18. The bellowsshaped boot 20 is attached to an outer periphery of the outer joint member 2 and an outer periphery of the shaft 17 connected to the inner joint member 3. Both ends of the boot 20 are fastened and fixed to the outer joint member 2 and the shaft 17 by boot bands 21 and 22. Grease is sealed as a lubricant inside the joint covered with the boot 20.

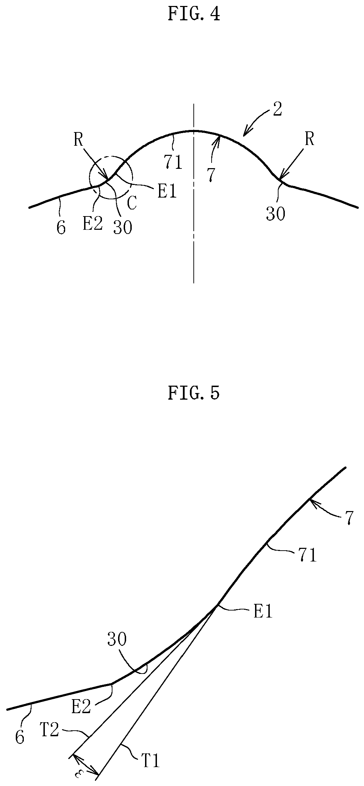

FIG. 4 is an enlarged cross-sectional view illustrating the spherical inner peripheral surface 6 and the track groove 7 of the outer joint member 2 illustrated in FIG. 3, and FIG. 5 is an enlarged cross-sectional view illustrating a region C in FIG. 4.

As illustrated in FIG. 4, a convex arc-shaped chamfered portion (track chamfer) 30 having a curvature radius R is formed between the spherical inner peripheral surface 6 and the guide surface 71 of the track groove 7 of the outer joint member 2. As illustrated in FIG. 5, the chamfered portion 30 and the guide surface 71 of the track groove 7 are not smoothly continuous, and an edge exists at a connection point E1 between the chamfered portion and the guide surface. Further, an angle ε between a tangent T1 of the guide surface 71 of the track groove 7 and a tangent T2 of a chamfered portion 30 at the connection point E1 is larger than 0° and equal to or smaller than 15° (0° < ε ≤ 15°). In the present embodiment, an edge E2 is also provided between the chamfered portion 30 and the spherical inner peripheral surface 6 of the outer joint member 2, but the chamfered portion 30 and the spherical inner peripheral surface 6 may be smoothly continued so that the both have a common tangent.

The outer joint member 2 is manufactured through main processes of cold forging of a steel material, heat treatment, and finish processing of the spherical inner peripheral surface 6 and the track groove 7. Hereinafter, each process will be briefly described.

In the cold forging, the spherical inner peripheral surface 6, the track groove 7, and the chamfered portion 30 are each molded by a metal mold. During the cold forging, the connection point between the chamfered portion 30 and the guide surface 71 of the track groove 7 is molded as an edge. Therefore, even in a stage of an intermediate product before the finish processing after the cold forging, an edge portion exists between the chamfered portion 30 and the guide surface 71 of the track groove 7.

The heat treatment is applied to the spherical inner peripheral surface 6 and the surface (guide surface 71) of the track groove 7, and a cured layer (not illustrated) is formed on the spherical inner peripheral surface 6 and the surface of the track groove 7 by this heat treatment. As the heat treatment, for example, induction hardening can be used. The finish processing is a process for finishing the spherical inner peripheral surface 6 and the guide surface 71 of the track groove 7 within a predetermined tolerance range while leaving the cured layer, and one or both of cutting and grinding are performed as the finish processing. Since the spherical inner peripheral surface 6 and the guide surface 71 of the track groove 7 are subjected to the finish processing in this manner, the spherical inner peripheral surface 6 and the guide surface 71 of the track groove 7 of a final product become surfaces subjected to the finish processing (cut surfaces or ground surfaces). Since the chamfered portion 30 is not subjected to the finish processing, the chamfered portion 30 of the final product has a forged skin.

As in the present embodiment, by forming the edge portion between the track groove 7 and the inner surface of the chamfered portion 30 at the time of cold forging, it is not necessary to smoothly connect a molded portion of the track groove 7 and a molded portion of the chamfered portion 30 of the metal mold, so that it is possible to reduce manufacturing cost of the metal mold and simplify the cold forging process. In addition, this edge portion does not disappear with the finish processing of the track groove 7, and the edge-shaped connection point E1 is formed between the guide surface 71 of the track groove 7 and the chamfered portion 30 after the finish processing (ε > 0°). Therefore, at the time of finish processing, processing for smoothly connecting the guide surface 71 of the track groove 7 and the chamfered portion 30 is also unnecessary. As described above, measures, processing, and the like for smoothly connecting the guide surface 71 of the track groove 7 and the chamfered portion 30 are unnecessary, so that manufacturing cost of the outer joint member 2 can be reduced.

In addition, according to verification of the present invention, it has been found that when the angle ε between the tangent T1 of the guide surface 71 and the tangent T2 of the chamfered portion 30 at the connection point E1 (hereinafter referred to as an angle between tangents) is managed to be 15 degrees or less, even when high torque is transmitted, an excessive edge load does not occur due to contact with the ball 4 on a shoulder portion of the track groove 7, and deformation or the like of the outer joint member 2 on the shoulder portion of the track groove 7 can be suppressed. From the above findings, the angle ε between the tangents at the connection point E1 is preferably set within a range of 0° < ε ≤ 15°.

As described in Patent Literature 1, it has been a technical common sense that the guide surface 71 of the track groove 7 and the chamfered portion 30 should be continuously formed so as to be smoothly connected. On the other hand, the present invention is characterized in that cost and strength are both achieved by intentionally leaving the edge-shaped connection point E1 between the guide surface 71 of the track groove 7 and the chamfered portion 30 to achieve cost reduction, and by finding the range of the angle ε between the tangents at the connection point E1 that can prevent occurrence of an excessive edge load.

The curvature radius R of the chamfered portion 30 is preferably 3 mm or more and 9 mm or less. When the curvature radius R is less than 3 mm, an amount of chamfer decreases, so that an effect of alleviating an edge load becomes insufficient and an effect of suppressing deformation of the shoulder portion is deteriorated. When the curvature radius R exceeds 9 mm, the edge at the connection point E1 (furthermore, the connection point E2) becomes sharp, and it becomes difficult to maintain the angle ε between the tangents at 15° or less.

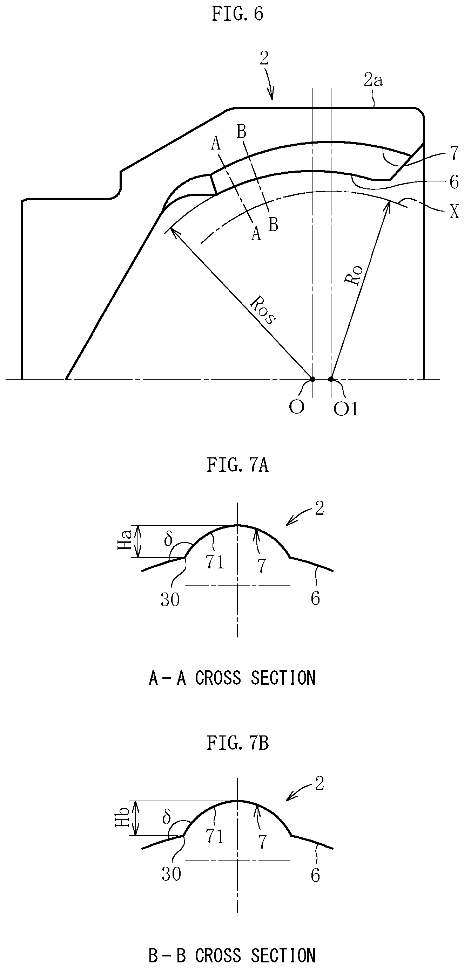

FIG. 6 is a longitudinal sectional view of the outer joint member 2. FIG. 7A is a cross-sectional view taken along a line A-A in FIG. 6, and FIG. 7B is a cross-sectional view taken along a line B-B in FIG. 6.

As illustrated in FIGS. 7A and 7B, in the outer joint member 2 of the Rzeppa-type constant velocity universal joint 1, since the curvature center O1 of the ball track center line X (curvature radius Ro) of the track groove 7 is axially offset with respect to the curvature center O of the spherical inner peripheral surface 6 (curvature radius Ros), a depth (Ha, Hb) of the track groove 7 becomes shallower toward the back side (Ha < Hb). Accordingly, an angle δ between the spherical inner peripheral surface 6 and the guide surface 71 of the track groove 7 changes in the axial direction, and the angle δ becomes larger toward the back side. Therefore, it is difficult to form the chamfered portion 30 with the uniform curvature radius R. Therefore, in the Rzeppa-type constant velocity universal joint 1, it is reasonable to make the curvature radius R of the chamfered portion 30 non-uniform in the axial direction. Specifically, the curvature radius R of the chamfered portion 30 is increased toward the back side. Even when the curvature radius R of the chamfered portion 30 changes in the axial direction as described above, it is preferable to set the angle ε between the tangents at the connection point E1 within the range of 0° < ε ≤ 15° in an entire region in the axial direction of the chamfered portion 30. Further, in the entire region, the curvature radius R of the chamfered portion 30 is preferably 3 mm or more and 9 mm or less.

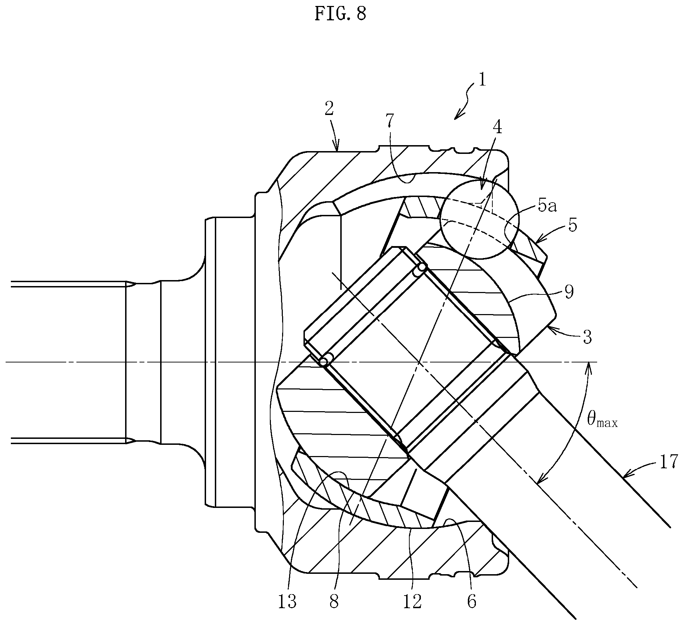

FIG. 8 is a longitudinal sectional view illustrating a state in which the fixed-type constant velocity universal joint 1 takes a maximum operating angle θmax (about 47°). In a state in which the high operating angle is taken as illustrated in FIG. 8, since the ball 4 on the back side (not illustrated in FIG. 6) performs torque transmission in a region where the depth of the track groove 7 is shallow, a contact ellipse due to contact with the ball 4 easily protrudes from the track groove 7 on a back side of the track groove 7, and occurrence of an edge load becomes a problem. Therefore, it is preferable to form the chamfered portion 30 in which the angle ε between the tangents is within the range of 0° < ε ≤ 15° at least in a region on the back side of the curvature center O1 of the ball track center line X of the track groove 7 of the outer joint member 2 (region on the back side of a plane orthogonal to an axis N-N including the curvature center O1). In this case, in the chamfered portion 30 in a region on the opening side of the curvature center O1 of the track groove 7, the angle ε between the tangents may be set to ε > 15° in addition to 0° < ε ≤ 15°. Further, in the region on the opening side of the curvature center O1 of the track groove 7, the chamfered portion 30 may not be provided, and the guide surface 71 of the track groove 7 and the spherical inner peripheral surface 6 may be directly connected.

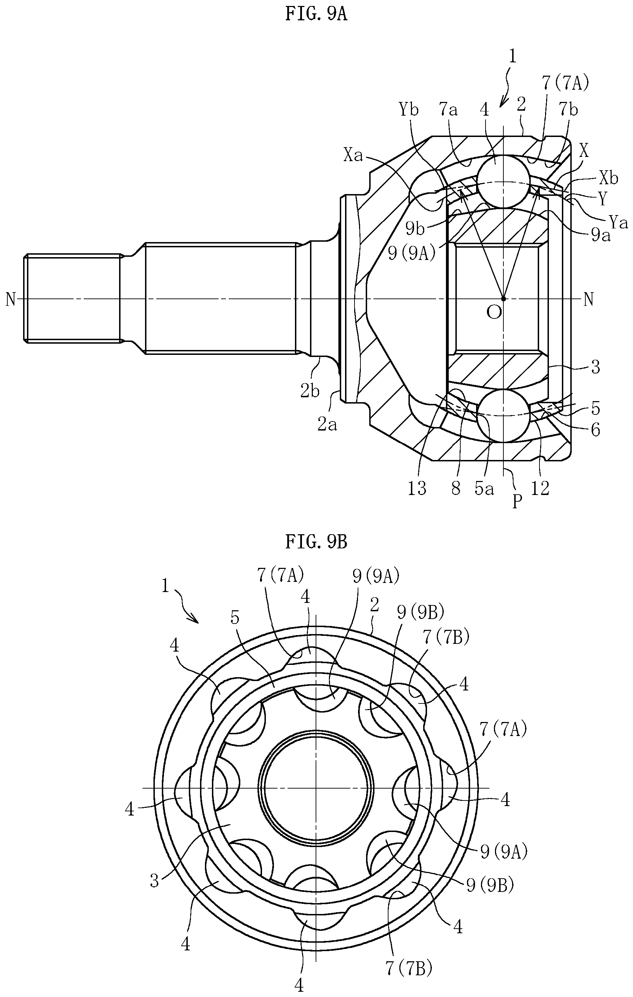

Next, a second embodiment of the present invention is illustrated in FIGS. 9A and 9B to 15A and 15B. The fixed-type constant velocity universal joint according to the first embodiment is a non-crossing track groove type in which the track grooves of the outer joint member and the inner joint member have planes including the ball track center lines X and Y of the respective track grooves and the joint center O in the same direction as the axis of the joint. A fixed-type constant velocity universal joint according to the second embodiment is a fixed-type constant velocity universal joint of a crossing track groove type.

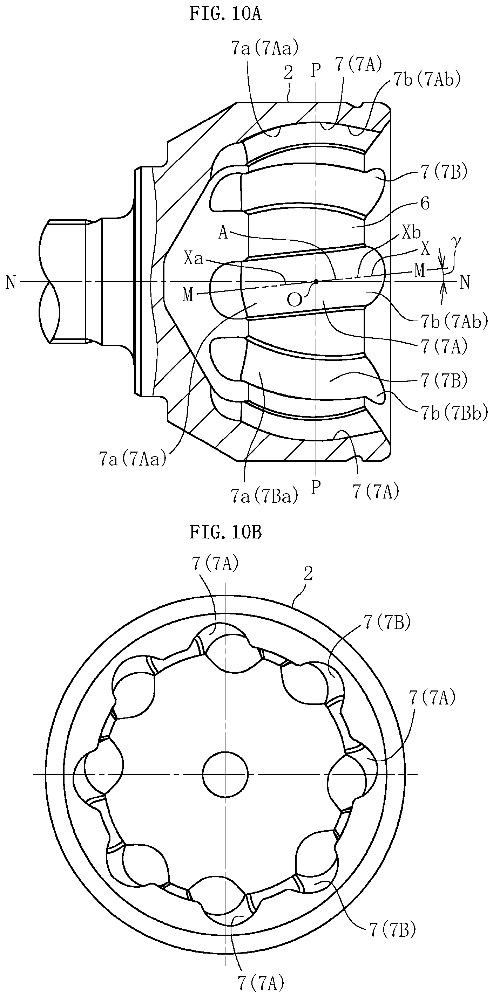

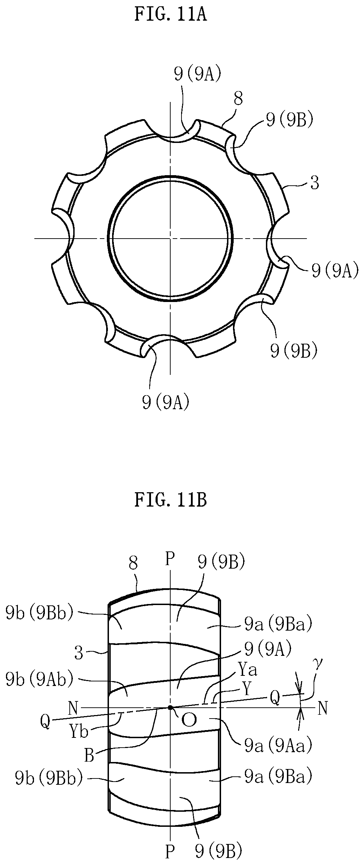

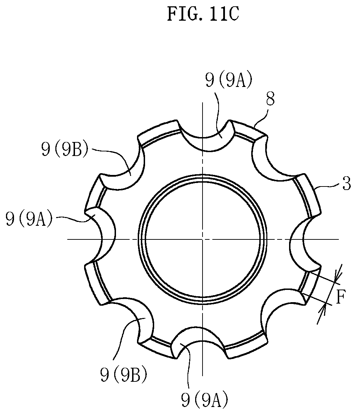

As illustrated in FIGS. 9A and 9B, a fixed-type constant velocity universal joint 1 mainly includes an outer joint member 2, an inner joint member 3, a ball 4, and a cage 5 as in the first embodiment. As illustrated in FIGS. 10A, 10B, 11A, 11B, and 11C, a plurality of (for example, eight) track grooves 7 and 9 formed on a spherical inner peripheral surface 6 of the outer joint member 2 and a spherical outer peripheral surface 8 of the inner joint member 3, respectively, is inclined in a circumferential direction with respect to an axis N-N of the joint, and inclination directions thereof are opposite to each other in the track grooves 7A, 7B and 9A, 9B adjacent to each other in the circumferential direction. Then, the balls 4 are disposed one by one at each intersection of the paired track grooves 7A, 9A and 7B, 9B of the outer joint member 2 and the inner joint member 3. Details of the track grooves 7 and 9 will be described later.

As illustrated in FIG. 9A, the track groove 7 of the outer joint member 2 includes a ball track center line X, the track groove 7 includes a first track groove portion 7a having an arc-shaped ball track center line Xa with a joint center O as a curvature center and a second track groove portion 7b having a linear ball track center line Xb, and the ball track center line Xb of the second track groove portion 7b is smoothly connected as a tangent to the ball track center line Xa of the first track groove portion 7a. Note that the track groove 7 of the outer joint member 2 may be only an arc-shaped portion including the ball track center line Xa with the joint center O as the curvature center.

On the other hand, the track groove 9 of the inner joint member 3 includes a ball track center line Y, the track groove 9 includes a first track groove portion 9a having an arc-shaped ball track center line Ya with the joint center O as the curvature center and a second track groove portion 9b having a linear ball track center line Yb, and the ball track center line Yb of the second track groove portion 9b is smoothly connected as a tangent to the ball track center line Ya of the first track groove portion 9a. Note that the track groove 9 of the inner joint member 3 may be only an arc-shaped portion including the ball track center line Ya with the joint center O as the curvature center.

Since the curvature centers of the ball track center lines Xa and Ya of the first track groove portions 7a and 9a are arranged at the joint center O on the axis N-N of the joint, a track groove depth can be made uniform, and machining can be facilitated. Cross-sectional shapes of the track grooves 7 and 9 are formed in an elliptical shape or a Gothic arch shape, and guide surfaces 71 and 91 of the track grooves 7 and 9 and the ball 4 are in contact with each other at a contact angle (about 30° to 45°), that is, a socalled angular contact (see FIG. 3). Therefore, the ball 4 is in contact with the guide surfaces 71 and 91 on side surface sides of the track grooves 7 and 9 slightly away from groove bottoms of the track grooves 7 and 9.

A state in which the track groove 7 of the outer joint member 2 is inclined in the circumferential direction with respect to the axis N-N of the joint will be described in detail with reference to FIGS. 10 A and 10B. FIG. 10A shows a partial longitudinal cross section of the outer joint member 2, and FIG. 10B shows a right side surface of the outer joint member 2. The track grooves 7 of the outer joint member 2 are denoted by reference numerals of the track grooves 7A and 7B from a difference in an inclination direction thereof. As illustrated in FIG. 10A, a plane M including the ball track center line X of the track groove 7A and the joint center O is inclined by an angle γ with respect to the axis N-N of the joint. In the track groove 7B adjacent to the track groove 7A in the circumferential direction, although not illustrated, the plane M including the ball track center line X of the track groove 7B and the joint center O is inclined by the angle γ in a direction opposite to the inclination direction of the track groove 7A with respect to the axis N-N of the joint. In the present embodiment, an entire region of the ball track center line X of the track groove 7A, that is, both the ball track center line Xa of the first track groove portion 7a and the ball track center line Xb of the second track groove portion 7b are formed on the plane M. However, the present invention is not limited thereto, and a mode in which only the ball track center line Xa of the first track groove portion 7a is included in the plane M can also be implemented. Therefore, it is sufficient that the plane M including at least the ball track center line Xa of the first track groove portion 7a and the joint center O is inclined in the circumferential direction with respect to the axis N-N of the joint, and that inclination directions of the first track groove portions 7a adjacent to each other in the circumferential direction are opposite to each other.

Here, the reference numerals of the track grooves will be supplemented. When referring to the entire track groove of the outer joint member 2, reference numeral 7 is assigned, and reference numeral 7a is assigned to the first track groove portion and reference numeral 7b is assigned to the second track groove portion. Furthermore, in a case of distinguishing track grooves having different inclination directions, reference numerals 7A and 7B are given, reference numerals 7Aa and 7Ba are given to the first track groove portions, and reference numerals 7Ab and 7Bb are given to the second track groove portions. Track grooves of the inner joint member 3 to be described later are also denoted by similar reference numerals.

Next, a state in which the track groove 9 of the inner joint member 3 is inclined in the circumferential direction with respect to the axis N-N of the joint will be described in detail with reference to FIGS. 11A, 11B, and 11C. FIG. 11B illustrates an outer peripheral surface of the inner joint member 3, FIG. 11A illustrates a left side surface of the inner joint member 3, and FIG. 11C illustrates a right side surface thereof. The track grooves 9 of the inner joint member 3 are denoted by reference numerals of the track grooves 9A and 9B from a difference in an inclination direction thereof. As illustrated in FIG. 11B, a plane Q including the ball track center line Y of the track groove 9A and the joint center O is inclined by an angle γ with respect to the axis N-N of the joint. In the track groove 9B adjacent to the track groove 9A in the circumferential direction, although not illustrated, the plane Q including the ball track center line Y of the track groove 9B and the joint center O is inclined by the angle γ in a direction opposite to the inclination direction of the track groove 9A with respect to the axis N-N of the j oint. The inclination angle γ is preferably 4° to 12° in consideration of operability of the constant velocity universal joint 1 and a spherical width F of the closest side of the track groove of the inner joint member 3. Further, similarly to the outer joint member described above, in the present embodiment, an entire region of the ball track center line Y of the track groove 9A, that is, both the ball track center line Ya of the first track groove portion 9a and the ball track center line Yb of the second track groove portion 9b are formed on the plane Q. However, the present invention is not limited thereto, and a mode in which only the ball track center line Ya of the first track groove portion 9a is included in the plane Q can also be implemented. Therefore, it is sufficient that the plane Q including at least the ball track center line Ya of the first track groove portion 9a and the joint center O is inclined in the circumferential direction with respect to the axis N-N of the joint, and that inclination directions of the first track groove portions 9a adjacent to each other in the circumferential direction are opposite to each other. The ball track center line Y of the track groove 9 of the inner joint member 3 is formed to be mirrored with the ball track center line X of the paired track groove 7 of the outer joint member 2 with reference to a plane P including the joint center O in a state of an operating angle of 0°.

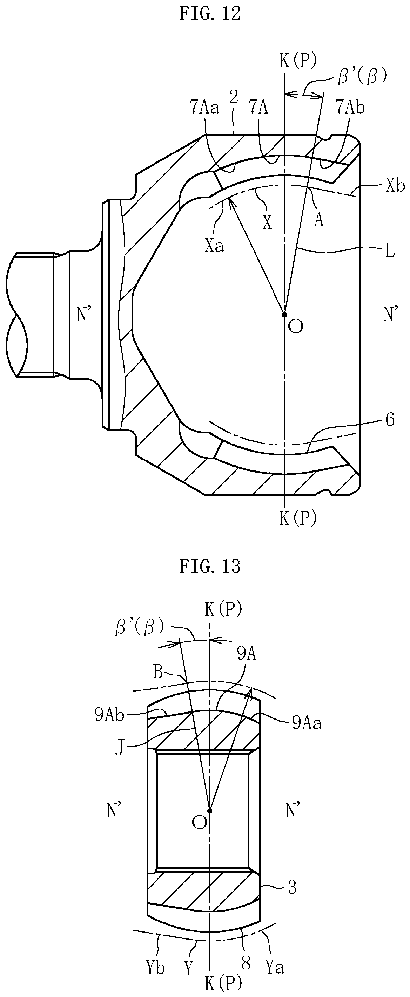

Details of the track groove as viewed from a longitudinal cross section of the outer joint member 2 will be described with reference to FIG. 12. The partial longitudinal cross section of FIG. 12 is a cross-sectional view seen in the plane M including the ball track center line X of the track groove 7A and the joint center O in FIG. 10A described above. Therefore, strictly speaking, it is not a longitudinal sectional view in the plane including the axis N-N of the joint, but a cross section inclined by the angle γ is illustrated. Although the track groove 7A of the outer joint member 2 is illustrated in FIG. 12, the track groove 7B has only an inclination direction opposite to the track groove 7A, and other configurations are the same as those of the track groove 7A, and thus, description thereof is omitted.

The track groove 7A is formed on the spherical inner peripheral surface 6 of the outer joint member 2 along the axial direction. The track groove 7A has the ball track center line X, and the track groove 7A includes the first track groove portion 7Aa having the arc-shaped ball track center line Xa with the joint center O as the curvature center (without axial offset) and the second track groove portion 7Ab having the linear ball track center line Xb. Then, at an end A on the opening side of the ball track center line Xa of the first track groove portion 7Aa, the linear ball track center line Xb of the second track groove portion 7Ab is smoothly connected as a tangent. That is, the end A is a connection point between the first track groove portion 7Aa and the second track groove 7Ab. Since the end A is located on the opening side with respect to the joint center O, the linear ball track center line Xb of the second track groove 7Ab connected as the tangent at the end A on the opening side of the ball track center line Xa of the first track groove 7Aa is formed so as to approach the axis N-N of the joint [see FIG. 9A] toward the opening side. As a result, it is possible to secure an effective track length at a maximum operating angle and suppress a wedge angle from becoming excessive.

As illustrated in FIG. 12, a straight line connecting the end A and the joint center O is denoted by L. An axis N'-N' of a joint projected on the plane M including the ball track center line X of the track groove 7A and the joint center O [see FIG. 10A] is inclined by an angle γ with respect to the axis N-N of the joint, and an angle formed by a perpendicular K of the axis N'-N' at the joint center O and the straight line L is β'. The perpendicular K is on the plane P that includes the joint center O and is orthogonal to the axis N-N of the joint in a state of the operating angle of 0°. Therefore, the angle β formed by the straight line L with respect to the plane P including the joint center O and being orthogonal to the axis N-N of the joint in the state of the operating angle of 0° has a relationship of sinβ = sinβ' × cosγ.

Similarly, details of the track groove from a longitudinal cross section of the inner joint member 3 will be described with reference to FIG. 13. The longitudinal cross section of FIG. 13 is a cross-sectional view seen in the plane Q including the ball track center line Y of the track groove 9A and the joint center O in FIG. 11B described above. Therefore, as in FIG. 12, strictly speaking, it is not a longitudinal sectional view in the plane including the axis N-N of the joint, but a cross section inclined by the angle γ is illustrated. Although the track groove 9A of the inner joint member 3 is illustrated in FIG. 13, the track groove 9B has only an inclination direction opposite to the track groove 9A, and other configurations are the same as those of the track groove 9A, and thus, description thereof is omitted.

The track groove 9A is formed on the spherical outer peripheral surface 8 of the inner joint member 3 along the axial direction. The track groove 9A has the ball track center line Y, and the track groove 9A includes the first track groove portion 9Aa having the arc-shaped ball track center line Ya with the joint center O as the curvature center (without axial offset) and the second track groove portion 9Ab having the linear ball track center line Yb. Then, the ball track center line Yb of the second track groove portion 9A is smoothly connected as a tangent at an end B on the back side of the ball track center line Ya of the first track groove portion 9Aa. That is, the end B is a connection point between the first track groove portion 9Aa and the second track groove portion 9Ab. Since the end B is located on the back side of the joint center O, the linear ball track center line Yb of the second track groove 9Ab connected as the tangent at the end B on the back side of the ball track center line Ya of the first track groove portion 9Aa is formed so as to approach the axis N-N of the joint [see FIG. 3(A)] toward the back side. As a result, it is possible to secure an effective track length at a maximum operating angle and suppress a wedge angle from becoming excessive.

As illustrated in FIG. 13, a straight line connecting the end B and the joint center O is defined as J. An axis N'-N' of a joint projected on the plane Q including the ball track center line Y of the track groove 9A and the joint center O [see FIG. 11B] is inclined by γ with respect to the axis N-N of the joint, and an angle formed by a perpendicular K of the axis N'-N' at the joint center O and the straight line J is β'. The perpendicular K is on the plane P which includes the joint center O in a state of the operating angle of 0° and is orthogonal to the axis N-N. Therefore, the angle β formed by the straight line J with respect to the plane P including the joint center O in the state of the operating angle of 0° and orthogonal to the axis N-N of the joint has a relationship of sinβ = sinβ' × cosγ.

Next, the angle β formed by the straight lines L and J with respect to the plane P including the joint center O in the state of the operating angle of 0° will be described. When an operating angle θ is taken, the ball 4 moves by θ/2 with respect to the plane P including the joint center O of the outer joint member 2 and the inner joint member 3 and orthogonal to the axis N-N of the joint. The angle β is determined from 1/2 of the operating angle frequently used, and a range of the track groove with which the ball 4 comes into contact is determined in a range of the operating angle frequently used. Here, the operating angle frequently used is defined. First, a normal angle of the joint refers to an operating angle generated at a fixed-type constant velocity universal joint of a front drive shaft when a steering is in a straight traveling state in an automobile in which one person rides on a horizontal flat road surface. The normal angle is usually selected and determined between 2° and 15° according to a design condition for each vehicle type.

The operating angle frequently used is not a high operating angle that occurs when the above-described automobile turns right or left at an intersection, for example, but an operating angle that occurs in a fixed-type constant velocity universal joint when the automobile continuously travels on a curved road or the like, and this is also determined according to a design condition for each vehicle type. The operating angle frequently used is about 20° at maximum. As a result, the angle β formed by the straight lines L and J with respect to the plane P including the joint center O in the state of the operating angle of 0° and orthogonal to the axis N-N of the joint is set to 3° to 10°. However, the angle β is not limited to 3° to 10°, and can be appropriately set according to the design condition of the vehicle type. By setting the angle β to 3° to 10°, it can be widely used for various vehicle types.

With the above-described angle β, in FIG. 12, the end A of the ball track center line Xa of the first track groove portion 7Aa is located at a center position of the ball when the ball moves to the most opening side along the axial direction at the operating angle frequently used. Similarly, in the inner joint member 3, in FIG. 13, the end B of the ball track center line Ya of the first track groove portion 9Aa is located at a center position of the ball when the ball moves to the most back side along the axial direction at the operating angle frequently used. With such a setting, in a range of the operating angle frequently used, the balls 4 are located in the first track groove portions 7Aa and 9Aa of the outer joint member 2 and the inner joint member 3 and in the first track groove portions 7Ba and 9Ba thereof in which the inclination directions are opposite (see FIGS. 10A, 10B, 11A, 11B, and 11C). Therefore, forces in opposite directions from the balls 4 act on the pocket portions 5a adjacent to each other in the circumferential direction of the cage 5, and the cage 5 is stabilized at a position of the joint center O (see FIG. 9A). For this reason, a contact force between the spherical outer peripheral surface 12 of the cage 5 and the spherical inner peripheral surface 6 of the outer joint member 2 and a contact force between the spherical inner peripheral surface 13 of the cage 5 and the spherical outer peripheral surface 8 of the inner joint member 3 are suppressed, the joint operates smoothly at the time of a high load or highspeed rotation, torque loss and heat generation are suppressed, and durability is improved.

Also in the fixed-side constant velocity universal joint 1 of the second embodiment described above, a chamfered portion 30 (see FIG. 4) having an arcuate cross-sectional shape in a direction orthogonal to the axial direction is formed between the spherical inner peripheral surface 6 and the guide surface 71 of the track groove 7 of the outer joint member 2. Then, the chamfered portion 30 and the guide surface of the track groove 7 of the outer joint member 2 are connected at an edge-shaped connection point E1, and an angle ε between a tangent of the guide surface 71 and a tangent of the chamfered portion 30 at the connection point is set in a range of 0° < ε ≤ 15°. At this time, a curvature radius R of the chamfered portion 30 is preferably 3 mm or more and 9 mm or less.

FIG. 14 is a longitudinal sectional view of the outer joint member 2 in the fixed-type constant velocity universal joint 1 of the crossing track groove type, FIG. 15A illustrates a cross section taken along a line A'-A' in FIG. 14, and FIG. 15B illustrates a cross section taken along a line B'-B' in FIG. 14.

As illustrated in FIGS. 15A and 15B, in the outer joint member 2 of the constant velocity universal joint 1 of the crossing track groove type, a curvature center of the ball track center line X (curvature radius Ro) of the track groove 7 coincides with the joint center O which is a curvature center of the spherical inner peripheral surface 6 (curvature radius Ros), so that a depth (Ha, Hb) of the track groove 7 is uniform in the axial direction (Ha = Hb). Accordingly, since an angle δ between the spherical inner peripheral surface 6 and the track groove 7 becomes constant in the axial direction, the chamfered portion 30 can be formed with the uniform curvature radius R. Therefore, in the constant velocity universal joint 1 of the crossing track groove type as in the second embodiment, the curvature radius R of the chamfered portion 30 is preferably constant in the axial direction. In this case, the curvature radius R of the chamfered portion 30 is also preferably set to a constant value within a range of 3 mm or more and 9 mm or less.

In the second embodiment, the chamfered portion 30 is formed over an entire axial length of the track groove 7. On the other hand, as in the first embodiment, the chamfered portion 30 in which an angle ε between tangents is within a range of 0° < ε ≤ 15° may be formed only on a back side (back side of the curvature center O1) of the track groove 7 of the outer joint member 2 where a high load is generated on the ball 4 at the high operating angle.

In the fixed-type constant velocity universal joint of the above embodiments, the number of balls 4 has been described as eight, but the present invention is not limited thereto. The number of balls can be six to ten or more as appropriate.

In addition, in the fixed-type constant velocity universal joint of the second embodiment, the ball track center line Xb of the second track groove portion is linear, but the present invention is not limited thereto. In short, as long as the shape is different from the shape of the ball track center line Xa of the first track groove portion, and the effective track length can be increased to achieve the high operating angle, an appropriate shape can be formed, and for example, the shape may be an ellipse or a linear shape. In addition, each of the first track groove portion and the second track groove portion is not limited to the single arc, and may be formed of a plurality of arcs in consideration of a track groove depth and the like. Furthermore, although the track grooves are arranged at equal pitches in the circumferential direction, the track grooves may be arranged at unequal pitches. In addition, although the inclination angle γ of the first track groove with respect to the axis N-N of the joint is equal in all the track grooves, the present invention is not limited thereto. The inclination angles γ of the paired first track groove and the other paired first track groove of the outer joint member and the inner joint member may be made unequal. In short, it is sufficient that each inclination angle is set such that the axial forces of the balls acting on all the pocket portions in the circumferential direction of the cage are balanced as a whole. In addition, although the embodiments of the angular contact in which the track groove and the ball are in contact with each other at the contact angle have been described, the present invention is not limited thereto, and a circular contact in which the cross-sectional shape of the track groove is formed in a circular shape may be used.

It is needless to say that the present invention is not limited to the above-described embodiments at all, and can be embodied in various forms without departing from the gist of the present invention. The scope of the present invention is described in the claims, and further includes the equivalent meanings described in the claims and all the changes within the scope.

### REFERENCE SIGNS LIST

- 1: Fixed-type constant velocity universal joint
- 2: Outer joint member
- 3: Inner joint member
- 4: Ball
- 5: Cage
- 5a: Pocket
- 6: Spherical inner peripheral surface
- 7: Track groove
- 8: Spherical outer peripheral surface
- 9: Track groove
- 30: Chamfered portion
- 71: Guide surface
- 91: Guide surface
- E1: Connection point
- O: Joint center
- O1: Curvature center
- O2: Curvature center
- R: Curvature radius of chamfered portion

## Claims

1. A fixed-type constant velocity universal joint comprising: an outer joint member having a plurality of track grooves formed on a spherical inner peripheral surface and having an opening side and a back side separated in an axial direction; an inner joint member having a plurality of track grooves formed on a spherical outer peripheral surface; a ball disposed between the track groove of the outer joint member and the track groove of the inner joint member corresponding thereto; and a cage having a pocket for accommodating the ball and fitted to the spherical inner peripheral surface of the outer joint member and the spherical outer peripheral surface of the inner joint member, the track groove of the outer joint member having a guide surface for guiding the ball, and a chamfered portion having an arcuate cross-sectional shape in a direction orthogonal to the axial direction being formed between the spherical inner peripheral surface and the guide surface of the outer joint member, wherein
the chamfered portion and the guide surface of the outer joint member are connected at an edge-shaped connection point, and an angle ε between a tangent of the guide surface and a tangent of the chamfered portion at the connection point is set to 0° < ε ≤ 15°.

2. The fixed-type constant velocity universal joint according to claim 1, wherein a curvature radius R of the chamfered portion is 3.0 mm ≤ R ≤ 9.0 mm.

3. The fixed-type constant velocity universal joint according to claim 1, wherein the track groove of the outer joint member has a portion in which a ball track center line is an arc.

4. The fixed-type constant velocity universal joint according to claim 3, wherein the curvature radius of the chamfered portion is made non-uniform in the axial direction.

5. The fixed-type constant velocity universal joint according to claim 3, wherein the chamfered portion is provided on a back side of a curvature center of the ball track center line.

6. The fixed-type constant velocity universal joint according to any one of claims 3 to 5, wherein a curvature center of the ball track center line and a curvature center of the spherical inner peripheral surface are offset in the axial direction.

7. The fixed-type constant velocity universal joint according to claim 3, wherein the curvature radius of the chamfered portion is made uniform in the axial direction.

8. The fixed-type constant velocity universal joint according to claim 3, wherein the chamfered portion is provided over an entire axial length of the track groove of the outer joint member.

9. The fixed-type constant velocity universal joint according to claim 3, 7, or 8, wherein an axial offset amount between a curvature center of the ball track center line and a curvature center of the spherical inner peripheral surface is set to 0.

10. The fixed-type constant velocity universal joint according to claim 9, wherein a plane including the ball track center line of the track groove of the outer joint member and a joint center is inclined with respect to an axis of the joint, and inclination directions of the track grooves adjacent to each other in a circumferential direction are opposite to each other, and
a ball track center line of the track groove of the inner joint member is formed in mirror-image symmetry with the ball track center line of the paired track groove of the outer joint member with reference to a plane including the joint center and being orthogonal to the axis of the joint in a state of an operating angle of 0°.
